# EUROPEAN PATENT SPECIFICATION

(11) **EP 1 628 446 B1**
(45) Date of publication and mention of the grant of the patent: **14.11.2007**
(21) Application number: 05017506.6
(22) Date of filing: 11.08.2005
(51) Int. Cl.: H04L 12/56

(54) **Method for transmitting information through a communication link and respective transmitting device and communication system**
Verfahren zur Übertragung von Informationen über eine Kommunikationsverbindung und zugehörige Vorrichtung zur Übertragung und Kommunikationsnetz
Procédé pour la transmission d'informations sur une liaison de communication et dispositif respectif de transmission et système de communication

(30) Priority: 18.08.2004 US 602365 P
(43) Date of publication of application: 22.02.2006
(73) Proprietor: Infineon Technologies AG, 81669 München (DE)
(72) Inventor: Shapiro, Israel, Kelowna, BC V1W 1E6 (CA)
(74) Representative: Banzer, Hans-Jörg

(56) References cited:
- EP-A- 1 289 179
- US-A1- 2003 043 934
- US-B1- 6 542 465

## Description

### Field of the Invention

The present invention relates to a method for transmitting information through a communication link/channel, preferably a wireless communication channel, as well as a respective transmitting device and a communication system, preferably a wireless communication system, comprising such a transmitting device.

### Background

From the prior art already several solutions for establishing a pre-defined transmission quality or link quality in communication systems are known. According to the prior art, pre-defined "Quality of Service" (QoS) parameters are defined, and a transmitting device, for example a mobile phone, transmits a request to a receiving device, for example a base station, to transmit a set of link quality indications from the receiving device to the transmitting device so as to adjust its own transmission parameters accordingly. This means, according to the prior art, it is only the transmitting device which initiates such a link quality control, while the receiving device is not even aware of the pre-defined and required QoS parameter values which should be kept for a high quality transmission of information.

This, however, has the consequence that the transmitting device may use only the respective pre-defined set of link quality parameters/measures, like BER ("Bit Error Rate") and RSSI ("Received Signal Strength Information"), and the algorithm used for adapting the link quality is relatively coarse and not flexible.

From EP 1 289 179 A1 a method for transmitting information from a transmitting device to a receiving device through a communication link according to the preamble of claim 1, a receiving device according to the preamble of claim 15, and a communication system according to the preamble of claim 17 are known. According to this document, the link quality of a communication link of a wireless telecommunications network between a transmitting device and a receiving device is monitored so as to adjust transmission parameters accordingly. A notification about the current link quality is transmitted from the receiving device to the transmitting device so as to allow the adjustment of the transmission parameters accordingly.

US 2003/0043934 A1 discloses a wireless communication system according to the ultra-wideband standard. Furthermore, US 6,542,465 B1 discloses the transmission of notifications about changes of the link quality between different layers of a communication device.

The object underlying the present invention is to provide a method for transmitting information through a communication link from a transmitting device to a receiving device as well as a respective transmitting device and a respective communication system, which allow for an improved and more flexible link quality adaptation/link quality adjustment.

### Summary

According to the present invention, this object is achieved by a method for transmitting information from a transmitting device to a receiving device through a communication link as defined in claim 1, a receiving device as defined in claim 15, and a communication system as defined in claim 17.

According to the present invention, this object is achieved by a method for transmitting information between a transmitting device and a receiving device through a communication link, preferably a wireless communication link, where the receiving device itself monitors the reception quality of the communication channel, preferably in regular intervals, and transmits a respective notification on the current reception quality/link quality to the transmitting device.

The notification sent by the receiving device to the transmitting device comprises an instruction from the receiving device for the transmitting device to change its data rate or transmit power to improve the reception quality. Preferably, the notification regarding the reception quality/link quality also includes particular values for transmission parameters to be adjusted accordingly by the transmitting device.

According to a preferred embodiment of the present invention, it is not only the transmitting device which is aware of pre-defined QoS parameter values required for the transmission of the information with a given quality, but both the transmitting device and the receiving device are aware of these QoS parameter values which may comprise a mean data rate, a peak data rate, a jitter bound, a latency/delay bound or a maximum error rate or a token bucket size/maximum burst size etc.

According to the present invention, it is thus the receiving device which proactively guides the transmitting device to adapt for a desired transmission quality. This means that the receiving device initiates the above notification in the form of signalling messages to the transmitting device in order to guide the transmitting device to adjust transmission parameters to achieve the desired transmission quality. Consequently, it is no longer required to use only a predefined set of link quality measures, like PER and RSSI, and it is also possible to implement a more flexible and finer adaptation algorithm.

The present invention also involves further aspects which, in particular, may be realized independently from the above-mentioned transmission quality/link quality control. These further aspects comprise notifications for upper protocol layers, preferably both in the transmitting device and in the receiving device, upon adjustments to configuration in response to link/channel quality changes. In particular, an upper protocol layer or the PAL ("Protocol Adaptation Layer") of the transmitting device may decide to adapt the data rate appropriately depending on the link quality notification received from the receiving device, or it may decide to drop the transmission completely.

Moreover, the present invention also involves calculating a required link/channel time based on the above QoS parameter values and the link quality notification as received from the receiving device.

Furthermore, the present invention also involves performing modification/update to reservations of link/channel time for specific transmissions according to the QoS parameter values and the link quality notification.

The present invention may preferably be used in wireless communication systems, in particular according to the ultra-wideband technology, preferably in an MBOA ("Multi-Band OFDM Alliance") compliant MAC ("Media Access Controller") in which this involves modification/update to DRP ("Distributed Reservation Protocol") reservations that have been previously negotiated between the transmitting device and the receiving device to support use of exclusive link/channel time to maintain the required QoS for the connection that is monitored.

Further, the present invention may preferably be used in wireless communication systems, in particular according to the ultra-wideband technology according to the specifications of the WiMedia Alliance and the MBOA, preferably implementing the QoS requirements or QoS parameters defined herein (mean data rate, peak data rate, jitter bound, latency/delay bound etc.). However, as a matter of course, the present invention is not restricted to this preferred field of technology, but it may be used in any communication system, in particular also in wired or optical communication systems, where a high transmission/link quality is desirable.

### Brief Description of the Drawings

In the following, a preferred embodiment of the present invention will be described in detail with reference to the drawings.
Fig. 1 shows a simplified block diagram of a communication system according to the preferred embodiment of the present invention, and
Fig. 2 shows a conceptual flowchart in order to explain the transmission of information in the communication system of Fig. 1.

### Detailed Description

In the following Detailed Description, reference is made to the accompanying drawings which form a part hereof, and in which is shown by way of illustration specific embodiments in which the invention may be practiced. In this regard, directional terminology, such as "top," "bottom," "front," "back," "leading," "trailing," etc., is used with reference to the orientation of the Figure(s) being described. Because components of embodiments of the present invention can be positioned in a number of different orientations, the directional terminology is used for purposes of illustration and is in no way limiting.

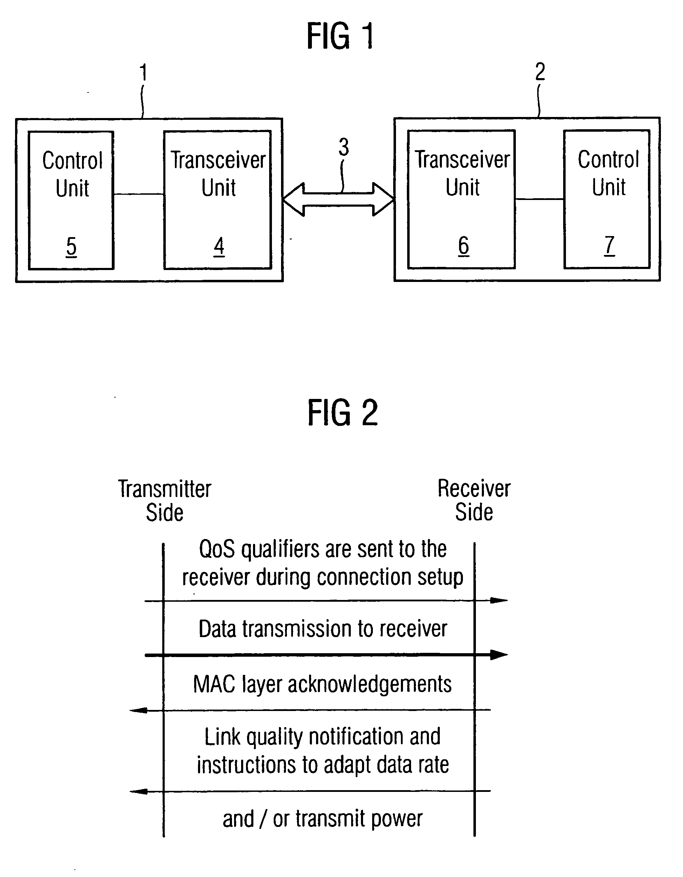

Fig. 1 shows a communication system, for example a wireless communication system, comprising a transmitting device 1 and a receiving device 2 being coupled by a communication channel/link 3 which is preferably a wireless communication channel/link. For example, the communication system may be a communication system according to the UWB technology ("Ultra-Wideband"), with each device including a MAC according to the MBOA specification, a WiMCA ("WiMedia Alliance MAC Convergence Architecture") layer, one or more PALs and one or more upper layer protocols. The transmitting device 1 is adapted to transmit information, which may include data, video and audio information, to the receiving device 2. The receiving device is adapted to receive this information through the communication link 3 for reproducing or processing the information.

As explained in the following, according to the present invention, a link quality notification is transmitted from the receiving device 2 to the transmitting device 1 through the communication link 3. Therefore, according to the present invention, the receiving device 2 does not only comprise a receiving unit, but a combined transmitting/receiving unit (transceiving unit) 6. Furthermore, the receiving device 2 comprises a control unit 7 which involves WiDME ("WiMCA Device Management Entity") and MLME ("Media Access Layer Management Entity").

The MLME provides the MAC layer management service interfaces for the layer management functions of the receiving device. In particular, the MLME provides an interface to higher layers through a set of primitives that define interactions between the higher layers and the MAC. The WiDME is an entity defined in the specification of WiMCA ("WiMedia MAC Convergence Architecture") to provide device management as well as an interface to upper protocol layers and to utilize the MLME and PLME ("Physical Layer (PHY) Management Entity") service interfaces provided by the MAC and the PHY layers to manage the device data transfer functionality and operation.

Similarly, the transmitting device 1 comprises a combined transmitting/receiving section 4 and a control unit 5 comprising WiDME and MLME.

As regards the link quality control, the receiving device 2 is proactive, which means that it constantly monitors the reception quality of the communication link 3. Both the transmitting device 1 and the receiving device 2 or the respective control units thereof are aware of those QoS parameter values that are required by upper layers for a transmission of information with a defined quality.

These QoS parameter values in particular comprise the mean data rate, the peak data rate, the jitter bound, the latency/delay bound, the maximum error rate, the token bucket size/maximum burst size etc. Depending on the predefined QoS for a set of transmission frames/packets, the required mean data rate is the average rate at which data is transmitted, generally measured in Bytes per second. Peak data rate is the maximum rate at which data can be transmitted, generally measured in Bytes per second. Jitter is the variability of the actual time interval between frame transmissions around the mean time interval, and jitter bound corresponds to the maximum allowed deviation from this mean time interval value. The latency/delay bound is an upper bound on the interval between the transmission and the reception of a frame/packet, including the actual transmission time on the communication link 3 and additional buffering that may be necessary at the transmitting device 1 and/or receiving device 2 to allow for retransmissions that help to overcome interference and data loss on the communication link 3. The parameter token bucket size defines the size of a mechanism that limits the bandwidth by accumulating tokens in a fixed size bucket and then removing tokens per each transmitted unit (frame/packet). This is a common QoS mechanim that gives some degree of control over the long term average transmission rate and the momentary burst rate of a set of transmissions. The parameter maximum error rate relates to the rate of errors, generally measured in bits per second, that is occurring due to interference on the communication medium. An upper layer protocol will tolerate no more than a maximum rate of errors in order to maintain a required level of quality for the connection data.

If the control unit 7 of the receiving device 2 recognizes that the link/reception quality diverges from these required QoS parameter values, it immediately responds by sending a respective link quality notification through the communication link 3 to the transmitting device 1 in order to keep the transmitting device 1 informed about the current link quality

However, this link quality notification does not only inform the transmitting device 1 on the current status of the link quality of the communication link 3, but it also comprises particular instructions for the transmitting device 1 to take respective steps for improving the link quality. In particular, by means of this link quality notification, the receiving device 2 may instruct the transmitting device 1 to change its data rate or transmit power, for example. The link quality notification of the receiving device 2 may also include desired values for other transmission parameters to be adjusted by the transmitting device 1.

In contrast to other existing solutions where the receiving device constantly polls the transmitting device for information on the link quality, according to the present invention there is no need to define a respective superset of link quality measurements. Instead, each implementer of the receiver side may select its own measurements that are available in the respective receiving device.

Fig. 2 shows a conceptional flowchart in order to explain in more detail the transmission of information between the transmitting device and the receiving device.

As shown in Fig. 2, at first the QoS parameter values (QoS qualifiers) are sent from the transmitting device 1 to the receiving device 2 during a connection setup. As soon as the connection has been set up, during normal operation there is a dataflow from the transmitting device to the receiving device, and respective MAC layer acknowledgements are sent from the receiving device 2 to the transmitting device 1. Furthermore, during normal operation, the receiving device 2 monitors the reception quality of the communication link 3 and informs the transmitting device 1 on the current link quality. If found necessary, the receiving device 2 in particular instructs the transmitting device 1 to change its data rate and/or its transmit power in order to improve the link quality.

Irrespective of the above concept or in addition thereto, the following aspects may also be realized in the communication system of Fig. 1:

A common platform may be provided for all PALs ("Protocol Adaptation Layer") in the system. The PAL design can be simplified by decoupling it from the MAC/PHY low level issues ("Media Access Layer", "Physical Layer") in order to eliminate the need for dealing with MAC/PHY specific parameters like preamble durations, various inter frame spacing, fragment sizes, media access latencies etc.

The communication system may in particular be adapted to perform the following essential tasks: support connection setup/modify/teardown, ongoing communication link quality monitoring, automatic data rate and transmit power adjustments, notifications for upper layers upon link capability changes (in particular when the boundaries for automatic data rate/transmit power adjustments are left), correlation with the interference mitigation sub-entity for bandwith rebalancing and/or channel time relinquishing. Interference mitigation is one of the responsibilities of the WiDME entity and defines a behavior that should minimize the interference caused by one of the communication devices 1, 2 to a neighboring communication device which is not participating in the same coordinated use of the communication link 3, including rules for choosing the communication channel to operate on and rules for setting transmission power and transmission rate of the respective communication device 1, 2.

The connection setup/modify/teardown aspect comprises providing a generic API ("Application Programming Interface"), i.e. a generic set of functions/parameters/software modules to be used for interfacing between the respective software blocks, for connection management, supporting the above-mentioned sufficient connection specific QoS parameter values, providing service primitives to abstract MLME SAP primitives as much as possible ("MAC Layer Management Entity", "Service Access Point"), communicating with the target device so that it is aware of the connection establishment/update requested by the initiator and the target device is able to update the respective connection parameters, and calculate the required channel time based on the pre-defined QoS parameter values (qualifiers) and the link quality information in order to perform adequate link/channel time reservations preferably through the DRP ("Distributed Reservation Protocol") mechanism. The DRP is a mechanism defined in the MBOA MAC standard ("Distributed Medium Access Control (MAC) for Wireless Networks") and allows for the negotiation and reservation of the medium access time. This is provided by defining that the medium access time is divided into fixed cycles (superframes), each subdivided into time slots which are called "Medium Access Slots" (MAS). The communication devices 1 and 2 implementing the MBOA MAC may negotiate the use of individual MAS and reserve them for use between the negotiating communication devices 1, 2.

The communication link quality monitoring and the automatic data rate and transmit power adjustments were already discussed above in detail.

The notification to the upper layers upon link quality changes, in particular out of the boundaries for the automatic data rate/transmit power adjustments, comprises that the PAL, i.e. the layer responsible for an adaptation of one specific protocol to another protocol, makes the decision either to reduce the data rate (lower resolution etc.) or to drop the transmission completely, if the link quality degrades. On the other hand, if the link quality improves, the PAL can make the decision to adjust the data rate appropriately, if it was previously reduced due to channel degradation and/or bandwidth management policies.

When correlating with the interference mitigation sub-entity for bandwidth rebalancing and/or channel time relinquishing, the PALs are preferably informed accordingly.

## Claims

1. A method for transmitting information from a transmitting device (1) to a receiving device (2) through a communication link (3),
comprising the steps of
monitoring a link quality of said communication link (3) at the receiving device (2),
sending a respective link quality notification from the receiving device (2) to the transmitting device (1), and
adapting transmission parameters at the transmitting device (1) depending on the link quality notification received from the receiving device (2) for said transmission of information,
**characterized in that**
said link quality notification of the receiving device (2) comprises an instruction from said receiving device (2) for said transmitting device (1) to change its data rate or transmit power to a particular desired value to improve the link quality of said communication link (3) if the link quality monitored by said receiving device (2) diverges from at least one pre-defined Quality of Service parameter value

2. The method according to claim 1, wherein said at least one Quality of Service parameter value is selected from a group comprising a mean data rate, a peak data rate, a jitter bound, a latency bound, a delay bound, a maximum error rate, a token bucket size, and a maximum burst size.

3. The method according to claim 1 or claim 2, wherein said link quality notification to said transmitting device (1) includes a required value for at least one transmission parameter of said transmitting device (1) to be adjusted by said transmitting device (1).

4. The method according to any one of claims 1-3, wherein said communication link (3) is a wireless communication link.

5. The method according to any one of claims 1-4, wherein said communication link (3) is an ultra-wideband communication link.

6. The method according to any one of claims 1-5, wherein the transmitting device (1) and the receiving device (2) further comprise a Media Access Control, MAC, layer according to the Multi-Band Orthogonal Frequency Division Multiplexing Alliance, MBOA, specifications.

7. The method according to any one of claims 1-6, wherein the transmitting device (1) and the receiving device (2) further comprise a Wireless Media Alliance Media Access Control Convergence Architecture, WiMCA, layer according to the Wireless Media, WiMedia, specifications.

8. The method according to any one of claims 1-7, further comprising the step of notifying at least one upper layer of the transmitting device (1) and/or the receiving device (2) of link quality changes and/or link capability changes.

9. The method according to any one of claims 1-8, wherein, after having received the link quality notification from the receiving device (2), the protocol adaptation layer of the transmitting device (1) decides whether to adjust at least one transmission parameter for said transmission of information or to drop said transmission completely.

10. The method according to any one of claims 1-9, further comprising the step of calculating a required communication channel time based on said link quality notification at said transmitting device (1) and/or said receiving device (2).

11. The method according to claim 10, wherein said required communication channel time is calculated in addition based on at least one pre-defined Quality of Service parameter value.

12. The method according to any one of claims 1-11, further comprising the step of performing a communication channel time reservation adaptation based on the link quality notification at the transmitting device (1) and/or the receiving device (2).

13. The method according to claim 12, wherein said communication channel time reservation adaptation is performed in addition based on at least one pre-defined Quality of Service parameter value.

14. The method according to any one of claims 1-13, wherein both the transmitting device (1) and the receiving device (2) are aware of at least one Quality of Service parameter value required for said transmission of information.

15. A receiving device (2) being adapted for receiving information from a transmitting device (1) through a communication link (3),
wherein the receiving device (2) is adapted for monitoring a link quality of said communication link (3) and sending a respective link quality notification to said transmitting device (1),
**characterized in that**
said link quality notification of the receiving device (2) comprises an instruction from said receiving device (2) for said transmitting device (1) to change its data rate or transmit power to a particular desired value to improve the link quality of said communication link (3) if the link quality monitored by said receiving device (2) diverges from at least one pre-defined Quality of Service parameter value.

16. A communication system, comprising
a transmitting device (1) for transmitting information, and
a receiving device (2) being coupled to said transmitting device (1) through a communication link (3) for receiving said information from said transmitting device (1) through said communication link (3),
wherein said receiving device (2) is adapted for monitoring a link quality of the communication link (3) and for sending a respective link quality notification to said transmitting device (1),
**characterized in that**
said link quality notification of the receiving device (2) comprises an instruction from said receiving device (2) for said transmitting device (1) to change its data rate or transmit power to a particular desired value to improve the link quality of said communication link (3) if the link quality monitored by said receiving device (2) diverges from at least one pre-deined Quality of Service parameter value.

17. The communication system according to claim 16, wherein said communication system is adapted to perform all the steps of the method according to any one of claims 1-14.

## Patentansprüche

1. Verfahren zum Übertragen von Informationen von einer Übertragungsvorrichtung (1) zu einer Empfangsvorrichtung (2) über eine Kommunikationsverbindung (3),
umfassend die Schritte
Überwachen einer Verbindungsqualität der Kommunikationsverbindung (3) an der Empfangsvorrichtung (2),
Senden einer entsprechenden Verbindungsqualitätsmeldung von der Empfangsvorrichtung (2) zu der Übertragungsvorrichtung (1), und
Anpassen von Übertragungsparametern an der Übertragungsvorrichtung (1) in Abhängigkeit von der Verbindungsqualitätsmeldung, welche von der Empfangsvorrichtung (2) für die Übertragung von Informationen empfangen wurde,
**dadurch gekennzeichnet, dass**
die Verbindungsqualitätsmeldung der Empfangsvorrichtung (2) eine Anweisung von der Empfangsvorrichtung (2) für die Übertragungsvorrichtung (1) umfasst, ihre Datenrate oder Übertragungsleistung auf einen speziellen gewünschten Wert zu ändern, um die Verbindungsqualität der Kommunikationsverbindung (3) zu verbessern, wenn die von der Empfangvorrichtung (2) überwachte Verbindungsqualität von mindestens einem vorbestimmten Dienstgüteparameterwert abweicht.

2. Verfahren nach Anspruch 1, wobei der mindestens eine Dienstgüteparameterwert aus einer Gruppe ausgewählt ist, welche eine mittlere Datenrate, eine Spitzendatenrate, eine Jitterbegrenzung, eine Latenzbegrenzung, eine Verzögerungsbegrenzung, eine maximale Fehlerrate, eine Sendeberechtigungszeichenspeichergröße und eine maximale Signalhäufungsgröße umfasst.

3. Verfahren nach Anspruch 1 oder Anspruch 2, wobei die Verbindungsqualitätsmeldung zu der Übertragungsvorrichtung (1) einen geforderten Wert für mindestens einen Übertragungsparameter der Übertragungsvorrichtung (1) aufweist, welcher von der Übertragungsvorrichtung (1) einzustellen ist.

4. Verfahren nach einem der Ansprüche 1-3, wobei die Kommunikationsverbindung (3) eine drahtlose Kommunikationsverbindung ist.

5. Verfahren nach einem der Ansprüche 1-4, wobei die Kommunikationsverbindung (3) eine Ultrabreitbandkommunikationsverbindung ist.

6. Verfahren nach einem der Ansprüche 1-5, wobei die Übertragungsvorrichtung (1) und die Empfangsvorrichtung (2) ferner eine Übertragungsmittelzugriffssteuerungsschicht, MAC (Media Access Control), gemäß der Mehrbandwellenlängenmultiplexallianzspezifikationen, MBOA (Multi-Band Orthogonal Frequency Division Multiplexing Alliance), umfassen.

7. Verfahren nach einem der Ansprüche 1-6, wobei die Übertragungsvorrichtung (1) und die Empfangsvorrichtung (2) ferner eine Übertragungsmittelzugriffssteuerungskonvergenzarchitekturschicht der Allianz für drahtlose Medien, WiMCA (Wireless Media Alliance Media Access Control Convergence Architecture), gemäß den Spezifikationen für drahtlose Medien, WiMedia (Wireless Media), umfassen.

8. Verfahren nach einem der Ansprüche 1-7, ferner umfassend den Schritt eines Meldens von Verbindungsqualitätsänderungen und/oder Verbindungsleistungsfähigkeitsänderungen mindestens einer oberen Schicht der Übertragungsvorrichtung (1) und/oder der Empfangsvorrichtung (2).

9. Verfahren nach einem der Ansprüche 1-8, wobei, nachdem die Verbindungsqualitätsmeldung von der Empfangsvorrichtung (2) empfangen wurde, die Protokollanpassungsschicht der Übertragungsvorrichtung (2) entscheidet, mindestens einen Übertragungsparameter für die Übertragung von Informationen einzustellen oder die Übertragung vollständig fallen zu lassen.

10. Verfahren nach einem der Ansprüche 1-9, ferner umfassend den Schritt eines Berechnens einer benötigten Kommunikationskanalzeit basierend auf der Verbindungsqualitätsmeldung in der Übertragungsvorrichtung (1) und/oder der Empfangsvorrichtung (2).

11. Verfahren nach Anspruch 10, wobei die erforderliche Kommunikationskanalzeit zusätzlich basierend auf mindestens einem vorbestimmten Dienstgüteparameterwert berechnet wird.

12. Verfahren nach einem der Ansprüche 1-11, ferner umfassend den Schritt einer Kommunikationskanalzeitreservierungsanpassung basierend auf der Verbindungsqualitätsmeldung in der Übertragungsvorrichtung (1) und/oder der Empfangsvorrichtung (2).

13. Verfahren nach Anspruch 12, wobei die Kommunikationskanalzeitreservierungsanpassung zusätzlich basierend auf mindestens einem vorbestimmten Dienstgüteparameterwert durchgeführt wird.

14. Verfahren nach einem der Ansprüche 1-13, wobei sowohl die Übertragungsvorrichtung (1) als auch die Empfangsvorrichtung (2) über mindestens einen Dienstgüteparameterwert, welcher für die Übertragung von Informationen gefordert wird, unterrichtet sind.

15. Eine Empfangsvorrichtung (2), welche zum Empfangen von Informationen von einer Übertragungsvorrichtung (1) über eine Kommunikationsverbindung (3) ausgestaltet ist,
wobei die Empfangsvorrichtung (2) zum Überwachen einer Verbindungsqualität der Kommunikationsverbindung (3) und zum Senden einer entsprechenden Verbindungsqualitätsmeldung zu der Übertragungsvorrichtung (1) ausgestaltet ist,
**dadurch gekennzeichnet, dass**
die Verbindungsqualitätsmeldung der Empfangsvorrichtung (2) eine Anweisung von der Empfangsvorrichtung (2) für die Übertragungsvorrichtung (1) umfasst, ihre Datenrate oder Übertragungsleistung auf einen speziellen gewünschten Wert zu ändern, um die Verbindungsqualität der Kommunikationsverbindung (3) zu verbessern, wenn die von der Empfangsvorrichtung (2) überwachte Verbindungsqualität von mindestens einem vorbestimmten Dienstgüteparameterwert abweicht.

16. Kommunikationssystem umfassend
eine Übertragungsvorrichtung (1) zum Übertragen von Informationen, und
eine Empfangsvorrichtung (2), welche mit der Übertragungsvorrichtung (1) über eine Kommunikationsverbindung (3) zum Empfangen der Informationen von der Übertragungsvorrichtung (1) durch die Kommunikationsverbindung (3) gekoppelt ist,
wobei die Empfangsvorrichtung (2) zum Überwachen einer Verbindungsqualität der Kommunikationsverbindung (3) und zum Senden einer entsprechenden Verbindungsqualitätsmeldung zu der Übertragungsvorrichtung (1) ausgestaltet ist,
**dadurch gekennzeichnet, dass**
die Verbindungsqualitätsmeldung der Empfangsvorrichtung (2) eine Anweisung von der Empfangsvorrichtung (2) für die Übertragungsvorrichtung (1) umfasst, ihre Datenrate oder Übertragungsleistung auf einen speziellen gewünschten Wert zu ändern, um die Verbindungsqualität der Kommunikationsverbindung (3) zu verbessern, wenn die von der Empfangsvorrichtung (2) überwachte Verbindungsqualität von mindestens einem vorbestimmten Dienstgüteparameterwert abweicht.

17. Kommunikationssystem nach Anspruch 16, wobei das Kommunikationssystem ausgestaltet ist, alle Schritte des Verfahrens nach einem der Ansprüche 1-14 auszuführen.

## Revendications

1. Procédé pour transmettre des informations d'un dispositif émetteur (1) à un dispositif récepteur (2) par l'intermédiaire d'une liaison de communication (3),
comprenant les étapes consistant à
surveiller une qualité de liaison de ladite liaison de communication (3) au niveau du dispositif récepteur (2),
envoyer une notification de qualité de liaison respective du dispositif récepteur (2) au dispositif émetteur (1), et
adapter des paramètres de transmission au niveau du dispositif émetteur (1) en fonction de la notification de qualité de liaison reçue en provenance du dispositif récepteur (2) pour ladite transmission d'informations,
**caractérisé en ce que**
ladite notification de qualité de liaison du dispositif récepteur (2) comprend une instruction en provenance dudit dispositif récepteur (2) pour ledit dispositif émetteur (1) pour changer son débit de données ou sa puissance de transmission à une valeur souhaitée particulière pour améliorer la qualité de liaison de ladite liaison de communication (3) si la qualité de liaison surveillée par ledit dispositif récepteur (2) diverge d'au moins une valeur de paramètre de Qualité de Service prédéfinie.

2. Procédé selon la revendication 1, dans lequel ladite au moins une valeur de paramètre de Qualité de Service est sélectionnée dans un groupe comprenant un débit de données moyen, un débit de données de crête, une limite de gigue, une limite de temps d'attente, une limite de retard, un taux d'erreurs maximum, une taille de seau à jetons, et une taille maximale de rafale.

3. Procédé selon la revendication 1 ou la revendication 2, dans lequel ladite notification de qualité de liaison audit dispositif émetteur (1) inclut une valeur requise pour au moins un paramètre de transmission dudit dispositif émetteur (1) devant être ajusté par ledit dispositif émetteur (1).

4. Procédé selon l'une quelconque des revendications 1 à 3, dans lequel ladite liaison de communication (3) est une liaison de communication sans fil.

5. Procédé selon l'une quelconque des revendications 1 à 4, dans lequel ladite liaison de communication (3) est une liaison de communication ultralarge bande.

6. Procédé selon l'une quelconque des revendications 1 à 5, dans lequel le dispositif émetteur (1) et le dispositif récepteur (2) comprennent en outre une couche MAC, contrôle d'accès au média, selon les spécifications MBOA, alliance OFDM (multiplexage par répartition orthogonale de la fréquence) multibande.

7. Procédé selon l'une quelconque des revendications 1 à 6, dans lequel le dispositif émetteur (1) et le dispositif récepteur (2) comprennent en outre une couche WiMCA, architecture de convergence du contrôle d'accès au média de l'alliance média sans fil selon les spécifications WiMedia, Média sans fil.

8. Procédé selon l'une quelconque des revendications 1 à 7, comprenant en outre l'étape consistant à notifier à au moins une couche supérieure du dispositif émetteur (1) et/ou du dispositif récepteur (2) des changements de la qualité de liaison et/ou des changements de la capacité de liaison.

9. Procédé selon l'une quelconque des revendications 1 à 8, dans lequel, après avoir reçu la notification de qualité de liaison en provenance du dispositif récepteur (2), la couche d'adaptation de protocole du dispositif émetteur (1) décide si ajuster au moins un paramètre de transmission pour ladite transmission d'informations ou abandonner ladite transmission complètement.

10. Procédé selon l'une quelconque des revendications 1 à 9, comprenant en outre l'étape consistant à calculer un temps de canal de communication requis sur la base de ladite notification de qualité de liaison au niveau dudit dispositif émetteur (1) et/ou dudit dispositif récepteur (2).

11. Procédé selon la revendication 10, dans lequel ledit temps de canal de communication requis est calculé en plus sur la base d'au moins une valeur de paramètre de Qualité de Service prédéfinie.

12. Procédé selon l'une quelconque des revendications 1 à 11, comprenant en outre l'étape consistant à effectuer une adaptation de réservation de temps de canal de communication sur la base de la notification de qualité de liaison au niveau du dispositif émetteur (1) et/ou du dispositif récepteur (2).

13. Procédé selon la revendication 12, dans lequel ladite adaptation de réservation de temps de canal de communication est effectuée en plus sur la base d'au moins une valeur de paramètre de Qualité de Service prédéfinie.

14. Procédé selon l'une quelconque des revendications 1 à 13, dans lequel à la fois le dispositif émetteur (1) et le dispositif récepteur (2) sont au courant d'au moins une valeur de paramètre de Qualité de Service requise pour ladite transmission d'informations.

15. Dispositif récepteur (2) étant adapté pour recevoir des informations en provenance d'un dispositif émetteur (1) par l'intermédiaire d'une liaison de communication (3),
dans lequel le dispositif récepteur (2) est adapté pour surveiller une qualité de liaison de ladite liaison de communication (3) et envoyer une notification de qualité de liaison respective audit dispositif émetteur (1),
**caractérisé en ce que**
ladite notification de qualité de liaison du dispositif récepteur (2) comprend une instruction en provenance dudit dispositif récepteur (2) pour ledit dispositif émetteur (1) pour changer son débit de données ou sa puissance de transmission à une valeur souhaitée particulière pour améliorer la qualité de liaison de ladite liaison de communication (3) si la qualité de liaison surveillée par ledit dispositif récepteur (2) diverge d'au moins une valeur de paramètre de Qualité de Service prédéfinie.

16. Système de communication comprenant
un dispositif émetteur (1) pour transmettre des informations, et
un dispositif récepteur (2) étant couplé audit dispositif émetteur (1) par l'intermédiaire d'une liaison de communication (3) pour recevoir lesdites informations en provenance dudit dispositif émetteur (1) par l'intermédiaire de ladite liaison de communication (3),
dans lequel ledit dispositif récepteur (2) est adapté pour surveiller une qualité de liaison de la liaison de communication (3) et pour envoyer une notification de qualité de liaison respective audit dispositif émetteur (1),
**caractérisé en ce que**
ladite notification de qualité de liaison du dispositif récepteur (2) comprend une instruction en provenance dudit dispositif récepteur (2) pour ledit dispositif émetteur (1) pour changer son débit de données ou sa puissance de transmission à une valeur souhaitée particulière pour améliorer la qualité de liaison de ladite liaison de communication (3) si la qualité de liaison surveillée par ledit dispositif récepteur (2) diverge d'au moins une valeur de paramètre de Qualité de Service prédéfinie.

17. Système de communication selon la revendication 16, dans lequel ledit système de communication est adapté pour exécuter toutes les étapes du procédé selon l'une quelconque des revendications 1 à 14.
